# FASCICULE DE BREVET EUROPEEN

(11) **EP 0 845 729 B1**
(45) Date de publication et mention de la délivrance du brevet: **07.03.2001**
(21) Numéro de dépôt: 97403086.8
(22) Date de dépôt: 02.06.1994
(51) Int. Cl.: G05D 16/10, F17C 13/04

(54) **Ensemble de commande de distrubution de gaz et bouteille de gaz équipée d'un tel ensemble**
Steuereinheit für Gasverteilung und mit einer solchen Einheit ausgestattete Flasche
Control unit for gas distribution and bottle provided with such unit

(30) Priorité: 03.06.1993 FR 9306646
(43) Date de publication de la demande: 03.06.1998
(62) Demande divisionnaire de: 94401216.0
(73) Titulaire: TAEMA, F-92182 Antony Cédex (FR)
(72) Inventeur: Lhomer, Gérard, 78320 Le Mesnil Saint Denis (FR); Theurant, Gilbert, 94400 Vitry Sur Seine (FR)
(74) Mandataire: Le Moenner, Gabriel

(56) Documents cités:
- EP-A- 0 428 901
- EP-A- 0 459 966
- US-A- 4 572 477
- US-A- 4 586 634
- US-A- 4 782 861
- US-A- 5 127 436

## Description

L'invention concerne un ensemble de commande et de distribution de gaz, destiné à être raccordé à un réservoir contenant ledit gaz sous pression, comportant au moins une sortie de gaz et, en série entre le réservoir et la sortie, un clapet d'isolation exposé à la pression du gaz dans le réservoir, et un moyen détendeur de pression, le clapet d'isolation étant disposé dans un bloc ayant une extrémité de montage sur le réservoir et étant actionnable entre des positions d'ouverture et de fermeture par une structure d'actionnement déplaçable axialement en réponse à l'actionnement d'un organe d'actionnement mobile par rapport au bloc.

Un ensemble de ce type est décrit dans les documents EP-A-0 428 901 et US-A-5 127 436 où l'organe d'actionnement est mobile en rotation et axialement, son déplacement axial entraînant le déplacement axial d'une structure d'actionnement composite, fragile, insérée dans le circuit de fluide.

La présente invention a pour objet de proposer un nouvel ensemble de commande et de distribution, de conception ergonomique, se présentant sous une forme unitaire, compacte et robuste, à actionnement franc et rapide, typiquement destiné à être monté à demeure sur le réservoir ou la bouteille de gaz, offrant toutes les fonctionnalités et les sécurités requises, tant pour la distribution de gaz que pour le remplissage du réservoir.

Pour ce faire, selon l'invention la structure d'actionnement comprend au moins un élément s'étendant radialement vis-à-vis de la structure d'actionnement et coopérant avec une surface de came.

La présente invention concerne également une bouteille de gaz équipée à demeure d'un tel ensemble unitaire.

D'autres caractéristiques et avantages de la présente invention ressortiront de la description suivante d'un mode de réalisation, donnée à titre illustratif mais nullement limitatif, faite en relation avec les dessins annexées, sur lesquels:
- la figure 1 représente, en coupe longitudinale un ensemble de commande et de distribution de gaz selon l'invention monté en place sur une bouteille de gaz; et
- la figure 2 est une vue de côté de l'ensemble pourvu d'un volet de sécurité représenté en pointillés sur la figure 1.

Dans les modes de réalisation représentés, un ensemble selon l'invention comprend typiquement un bloc inférieur, généralement désigné par la référence 1, comportant une extrémité inférieure tronconique filetée 2 pour son montage dans l'ouverture taraudée 3 d'un col de bouteille de gaz 4, par exemple une bouteille d'oxygène médical sous pression. Le bloc inférieur 1 comporte un alésage 5 s'étendant sur la majeure partie de la longueur du bloc 1 et débouchant vers le bas, dans lequel est disposé un clapet d'isolation 6 et son ressort 7 sollicitant normalement le clapet 6 dans une position de fermeture empêchant l'évacuation vers l'extérieur du gaz dans la bouteille 4. Dans l'alésage 5, débouchent un premier alésage étagé transversal 8 servant au montage d'un manomètre indicatif de la pression dans la bouteille 4, et un deuxième alésage étagé transversal 10 servant au montage d'un raccord de remplissage 11 renfermant un clapet anti-retour 12 et comportant avantageusement un alésage d'entrée taraudé 13 servant à recevoir un raccord rapide à griffes filetées extérieurement et muni de moyens (par exemple alésage d'entrée de diamètre inférieur à celui de l'alésage taraudé 13) empêchant l'utilisation d'un autre raccord que le raccord à griffes spécifiques. La partie supérieure du bloc 1 comporte un alésage 14, une gorge périphérique 15 et forme une jupe d'extrémité terminée par un biseau comportant deux fentes axiales diamétralement opposées 55₁ et 55₂.

Dans l'alésage 14 est reçue une extrémité en forme de jupe d'un bloc intermédiaire cylindrique 17 abritant un ressort 18 prenant appui sur le fond de l'alésage 14 et qui comprend une portion de tige creuse centrale 19 définissant un passage central 20 et s'étendant vers le bas dans un alésage central de diamètre réduit 21 du bloc 1 dans lequel s'étend également une portion de tige creuse avant du clapet d'isolation 6. Le passage 20 débouche vers le haut dans une petite protubérance tronconique formant siège de clapet 22 dans le fond d'un alésage central élargi 23 du bloc 17, dans lequel découchent deux alésages transversaux en vis-à-vis 24 et 25. L'extrémité supérieure du bloc 17 s'évase en forme de jupe formant un alésage supérieur 26 dans lequel est monté à coulissement étanche un piston 27 comportant une tige centrale 28 reçue à coulissement étanche dans l'alésage 23 et portant à son extrémité une garniture de clapet 29 destinée à coopérer avec le siège 22. La face supérieure du piston 27 est exposée à la pression régnant dans la partie inférieure de l'alésage 23 par un passage intérieur 30 s'étendant dans la tige 28, le piston 27 étant sollicité à l'écart du siège 22 par un ressort taré 31 prenant appui dans le fond de l'alésage 26.

L'alésage 26 est fermé, à sa partie supérieure, par un bloc supérieur 32 monté de façon étanche sur le bloc intermédiaire 17 au moyen d'un écrou 33. Dans un logement cylindrique à l'extrémité inférieure du bloc 32 est disposé un disque 34 pourvu d'une série de trous traversants 35 de dimensions différentes et angulairement répartis. Le disque 34 est déplaçable angulairement par rapport au bloc supérieure 32 par un dispositif d'actionnement manuel comportant une tige centrale 36 traversant axialement de façon étanche le bloc 32, couplée en rotation au disque 34 et dont l'extrémité supérieure est solidaire d'un organe d'actionnement, typiquement un voile diamétral d'extrémité 37 solidaire d'un disque d'indexage 38 surplombant le bloc 32 et comportant, dans sa face inférieure, une série de logements angulairement répartis 39 destinés à coopérer avec une bille 40 sollicitée élastiquement vers l'extérieur montée dans le bloc 32. Avantageusement, le bloc 32 porte, à son extrémité supérieure, un disque indicateur 41 parallèle au disque 38 et portant des repères angulairement répartis, visibles grâce à une lumière 42 ménagée dans le disque 38. Le bloc supérieur 32 comporte un passage axial 43 débouchant dans le logement du disque 34 et avec lequel communique un alésage transversal 44 servant au montage d'un raccord de sortie basse pression 45, typiquement une olive crantée.

Le sous-ensemble constitué par les blocs 17 et 32 est disposé dans un organe tubulaire d'actionnement 46 comprenant une partie supérieure 47, conformée avec des crans pour en faciliter l'actionnement et abritant le disque 42 et son voile d'actionnement 37, et une extrémité inférieure constituée par une série de griffes axiales 48 angulairement réparties comportant chacune une protubérance intérieure à profil intérieur tronconique destinée à coopérer avec l'extrémité tronconique en forme de rampe 16 du bloc inférieur 1 pour le montage de l'organe tubulaire 46 sur le bloc inférieur 1 par engagement à demeure des griffes 48 dans la gorge périphérique 15 afin de solidariser ainsi de façon indémontable l'organe tubulaire 46 et son sous-ensemble intérieur au bloc inférieur 1, tout en permettant à l'organe tubulaire 46 de tourner par rapport au bloc 1, autour de leur axe commun.

L'organe tubulaire 46 comporte, dans sa paroi latérale, une découpe supérieure 49 au travers de laquelle s'étend librement le raccord basse pression 45, ainsi que deux découpes ou lumières symétriques en vis-à-vis 50₁ et 50₂ présentant chacune un profil de came transversal et ayant une extension axiale adaptée au diamètre d'une portion intermédiaire d'un raccord moyenne pression 51 et d'un dispositif de clapet de surpression 52, respectivement, montés en vis-à-vis dans les alésages transversaux 24 et 25 du bloc intermédiaire 17 et s'étendant radialement vers l'extérieur en traversant les lumières 50₁ et 50₂ de l'organe d'actionnement tubulaire 46 et les fentes axiales 55₁ et 55₂ de la jupe d'extrémité supérieure du bloc 1. Le raccord moyenne pression 51 comporte typiquement un clapet anti-retour 53 qui est repoussé en position d'ouverture lors d'un raccordement à une canalisation d'utilisation.

Le fonctionnement de l'ensemble qui vient d'être décrit est le suivant:

A partir de la position normale de fermeture représentée sur la figure, l'organe d'actionnement tubulaire 46 est actionné en rotation par rapport au reste de l'ensemble de façon à provoquer, par coopération entre les surfaces de came des découpes 50₁ et 50₂ et les raccords associés 51 et 52, un déplacement vers le bas, à l'encontre du ressort 18, du sous-ensemble constitué par les blocs 17 et 32. Ce déplacement provoque l'ouverture du clapet d'isolation 6, repoussé par la portion de tige centrale 19 du bloc inférieur 17. La haute pression régnant dans la bouteille 4, par exemple de l'ordre de 200.10⁵ Pa, est ramenée, dans la partie inférieure de l'alésage 23, à une moyenne pression, par exemple de l'ordre de 3,5.10⁵ Pa pour les applications médicales, par le piston détendeur 27, en fonction de la force de tarage du ressort 31. L'utilisateur dispose donc, en sortie du raccord 51, d'un gaz à une moyenne pression disponible à un débit important, par exemple de l'ordre de 50 à 60 litres/minute pour les applications médicales. Parallèlement, en fonction de l'orifice 35 sélectionné par rotation du disque 34, l'utilisateur dispose, au raccord de sortie basse pression 45, d'une pression moindre, typiquement légèrement supérieure à la pression atmosphérique pour les débits utiles, sur une plage de débits variant, selon le réglage du régulateur de débit 34, 35, typiquement, pour les applications médicales, par incréments litre par litre de 0 à 15 litres/minute, comme cela convient pour les masques ou lunettes d'oxygénothérapie en soins à domicile ou en services d'urgences. Les risques de surpression au niveau des sorties 51 et 45 sont supprimés grâce au clapet de surpression 52 qui, dans les conditions susmentionnées, est calibré de façon à s'ouvrir lorsque la pression dans l'alésage 23 dépasse par exemple 5.10⁵ Pa.

On comprendra, de la description qui précède, que l'ensemble unitaire selon l'invention, typiquement livré avec la bouteille de gaz 4, permet à l'utilisateur de disposer, par simple actionnement en rotation de deux éléments juxtaposés (47, 37) disposés en bout de l'ensemble, et donc aisément accessibles par le haut d'un chapeau ou tulipe de protection de l'ensemble, monté sur la bouteille 4, d'un débit de gaz présélectionné à la demande et en outre, le cas échéant, d'une autre sortie de gaz à moyenne pression convenant en particulier pour les respirateurs en milieu hospitalier et à domicile, la disponibilité du gaz dans la bouteille étant contrôlable en permanence par le manomètre 9. Une fois la réserve de gaz épuisée, l'utilisateur déconnecte l'ensemble de son installation et renvoie la bouteille et son ensemble de commande et distribution de gaz au fournisseur qui, grâce à un outillage spécial qui lui est propre, peut remplir de nouveau la bouteille, simplement, sans démontage de l'ensemble, par le raccord de remplissage 11.

Selon un aspect de l'invention, convenant tout particulièrement aux bouteilles de gaz transportables, les sorties utilitaires 45 et 51 et le manomètre 9 sont disposés, en ligne, d'un même côté de l'ensemble unitaire, en regard d'une ouverture latérale formée dans le chapeau ou la tulipe de protection.

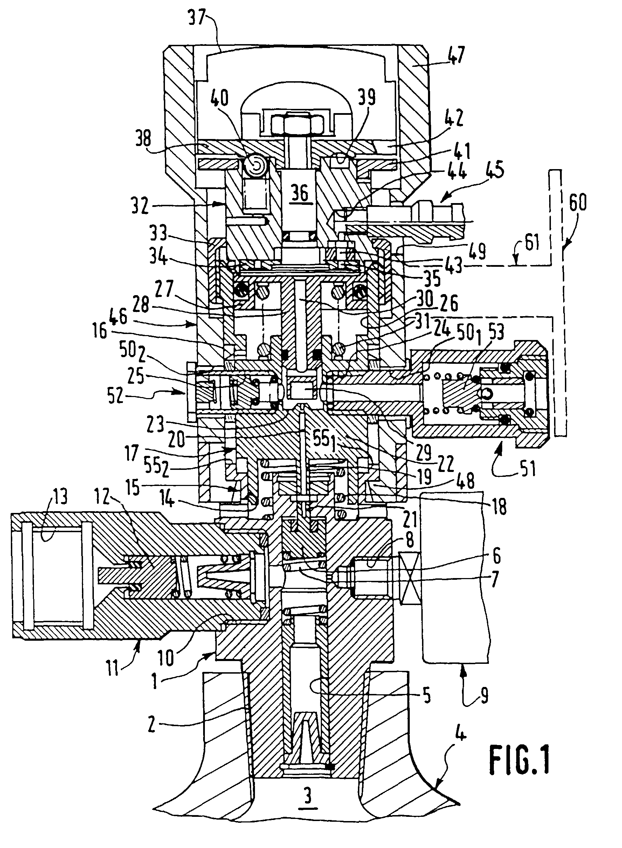

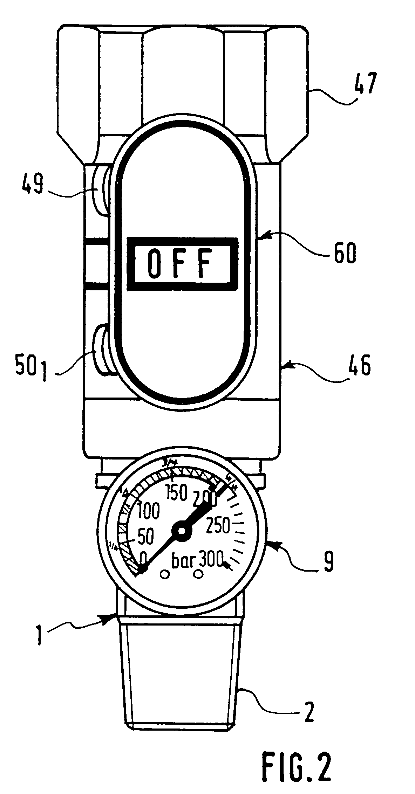

Comme représenté sur la figure 2 et en pointillés sur la figure 1, l'ensemble est alors avantageusement complété par un "drapeau" constitué par un volet 60 solidarisé, via une tige 61, à l'organe tubulaire 46. La tige 61 s'étend entre les raccords 42 et 51, l'embase de la tige 61 se situant entre les zones les plus proches de la partie supérieure 47, ou zones hautes, des lumières 49 et 50₁, et le volet 60 a une extension longitudinale telle qu'en position de fermeture de l'ensemble, il masque les deux raccords 42 et 51, empêchant ainsi de brancher les tuyaux sur un ensemble "fermé", d'autant que ce volet drapeau occulte, dans cette position, l'essentiel de l'ouverture d'accès formé dans le chapeau de la bouteille. Par contre, en position "d'ouverture" de l'ensemble, le volet, qui permet également l'actionnement de l'organe tubulaire 46, est quasiment entièrement caché dans le chapeau de la bouteille en donnant libre accès aux raccords 42 et 51, garantissant ainsi que les tuyaux s'y raccordant soient connectés à la source de fluide sous pression dans le conteneur, ce qui est important pour les applications médicales. L'essentiel des éléments constitutifs de l'ensemble est réalisé en métal, typiquement en laiton et en acier pour les ressorts, l'organe tubulaire 46, et typiquement le volet 60, étant réalisés en matériau plastique, par exemple un polyamide.

## Revendications

1. Ensemble de commande et de distribution de gaz, destiné à être raccordé à un réservoir (4) contenant ledit gaz sous pression, comportant au moins une sortie de gaz (45) et, en série entre le réservoir (4) et la sortie (45), un clapet d'isolation (6) exposé à la pression du gaz, et un moyen détendeur de pression (27, 29), le clapet d'isolation (6) étant disposé dans un bloc (1) ayant une extrémité (2) de montage sur le réservoir (4) et étant actionnable entre des positions d'ouverture et de fermeture par une structure d'actionnement (17) déplaçable axialement en réponse à l'actionnement d'un organe d'actionnement (46) mobile en rotation par rapport au bloc (1), caractérisé en ce que la structure d'actionnement (17) comprend au moins un élément (51, 52) s'étendant radialement vis-à-vis de la structure d'actionnement (17) et coopérant avec une surface de came (50, 50₂).

2. Ensemble selon la revendication 1, caractérisé en ce que l'organe d'actionnement comprend une tête de manoeuvre (47) à l'extrémité de l'ensemble opposée à l'extrémité de montage (2).

3. Ensemble selon l'une des revendications précédentes, caractérisé en ce que moyen détendeur de pression (27, 29) est disposé dans la structure d'actionnement (17).

4. Ensemble selon la revendication 3, caractérisé en ce que le moyen détendeur de pression comprend un moyen de piston (27) porte-clapet (29) monté à coulissement dans la structure d'actionnement (17).

5. Ensemble selon l'une des revendications précédentes, caractérisé en ce qu'il comporte un dispositif de remplissage (11) à clapet anti-retour (12) monté dans le bloc (1) et débouchant en amont du clapet d'isolation (6) et permettant le remplissage du réservoir (4).

6. Ensemble selon l'une des revendications précédentes, caractérisé en ce qu'il comporte un manomètre (9) monté dans le bloc (1) et communiquant avec le réservoir (4).

7. Ensemble selon l'une des revendications précédentes, caractérisé en ce qu'il comporte un clapet de surpression (52) en aval du clapet d'isolation (6).

8. Ensemble selon l'une des revendications précédentes, caractérisé en ce qu'il comporte un moyen (34, 35) régulateur de débit du gaz détendu.

9. Ensemble selon l'une des revendications précédentes, caractérisé en ce qu'il comporte une deuxième sortie de gaz (51).

10. Ensemble selon l'une des revendications 6 à 9, caractérisé en ce que le manomètre (9) et la sortie de gaz (45) sont disposés du même côté de l'ensemble.

11. Ensemble selon l'une des revendications précédentes, caractérisé en ce que le réservoir est une bouteille de gaz (4), la deuxième extrémité (2) du troisième bloc (1) étant filetée pour son montage dans le col (3) de la bouteille de gaz.

12. Bouteille de gaz équipée d'un ensemble selon l'une des revendications précédentes.

13. Bouteille de gaz équipée selon la revendication 12, caractérisé en ce qu'elle contient de l'oxygène médical.

## Claims

1. Gas control and release assembly for connection to a tank (4) containing the said gas under pressure, comprising at least one gas outlet (45) and, in series between the tank (4) and the outlet (45), an isolation valve (6) exposed to the pressure of the gas, and a pressure-reducing means (27, 29), the isolation valve (6) being situated inside a block (1) having one end (2) for attachment to the tank (4) and being actuatable between open and closed positions by an actuating structure (17) that moves axially in response to the actuation of an actuating member (46) that is rotatable relative to the block (1), the assembly being characterized in that the actuating structure (17) comprises at least one element (51, 52) that extends radially relative to the actuating structure (17) and interacts with a cam surface (50, 50₂).

2. Assembly according to Claim 1, characterized in that the actuating member comprises an operating head (47) at the opposite end of the assembly from the attachment end (2).

3. Assembly according to one of the previous claims, characterized in that the pressure-reducing means (27, 29) is situated inside the actuating structure (17).

4. Assembly according to Claim 3, characterized in that the pressure-reducing means comprises a valve-equipped (29) piston means (27) that slides inside the actuating structure (17).

5. Assembly according to one of the previous claims, characterized in that it comprises, mounted inside the block (1), a filling device (11) with non-return valve (12) connected upstream of the isolation valve (6) to allow the tank (4) to be filled.

6. Assembly according to one of the previous claims, characterized in that it comprises a pressure gauge (9) mounted inside the block (1) and communicating with the tank (4).

7. Assembly according to one of the previous claims, characterized in that it comprises an excess-pressure valve (52) downstream of the isolation valve (6).

8. Assembly according to one of the previous claims, characterized in that it comprises a means (34, 35) for regulating the rate of flow of the pressure-reduced gas.

9. Assembly according to one of the previous claims, characterized in that it comprises a second gas outlet (51).

10. Assembly according to one of Claims 6 to 9, characterized in that the pressure gauge (9) and the gas outlet (45) are located on the same side of the assembly.

11. Assembly according to one of the previous claims, characterized in that the tank is a gas bottle (4), the second end (2) of the third block (1) being threaded for attachment to the neck (3) of the gas bottle.

12. Gas bottle equipped with an assembly according to one of the previous claims.

13. Gas bottle equipped according to Claim 12, characterized in that it contains medical oxygen.

## Patentansprüche

1. Anordnung zur Steuerung und Verteilung von Gas, die an einem das unter Druck stehende Gas enthaltenden Behälter (4) angeschlossen werden soll und mindestens einen Gasausgang (45) und in Reihe zwischen dem Behälter (4) und dem Ausgang (45) ein dem Druck des Gases ausgesetztes Trennventil (6) sowie ein Druckmindermittel (27, 29) enthält, wobei das Trennventil (6) in einem Block (1) angeordnet ist, der ein Ende (2) zur Montage an dem Behälter (4) aufweist und durch eine Betätigungskonstruktion (17), die als Reaktion auf die Betätigung eines bezüglich des Blocks (1) drehbeweglichen Betätigungsglieds (46) axial verschiebbar ist, zwischen einer Öffnungs- und einer Schließstellung betätigt werden kann, dadurch gekennzeichnet, daß die Betätigungskonstruktion (17) mindestens ein Element (51, 52) aufweist, das sich gegenüber der Betätigungskonstruktion (17) radial erstreckt und mit einer Kurvenfläche (50, 50₂) zusammenwirkt.

2. Anordnung nach Anspruch 1, dadurch gekennzeichnet, daß das Betätigungsglied an dem Ende der Anordnung, das dem Montageende (2) gegenüberliegt, einen Bedienungskopf (47) aufweist.

3. Anordnung nach einem der vorhergehenden Ansprüche, dadurch gekennzeichnet, daß das Druckmindermittel (27, 29) in der Betätigungskonstruktion (17) angeordnet ist.

4. Anordnung nach Anspruch 3, dadurch gekennzeichnet, daß das Druckmindermittel ein das Ventil (29) tragendes Kolbenmittel (27) aufweist, das in der Betätigungskonstruktion (17) verschiebbar angebracht ist.

5. Anordnung nach einem der vorhergehenden Ansprüche, dadurch gekennzeichnet, daß sie eine in dem Block (1) angebrachte Füllvorrichtung (11) mit Rückschlagventil (12) enthält, die stromaufwärts des Trennventils (6) mündet und das Füllen des Behälters (4) gestattet.

6. Anordnung nach einem der vorhergehenden Ansprüche, dadurch gekennzeichnet, daß sie ein in dem Block (1) angebrachtes Manometer (9) enthält, das mit dem Behälter (4) in Verbindung steht.

7. Anordnung nach einem der vorhergehenden Ansprüche, dadurch gekennzeichnet, daß sie stromabwärts des Trennventils (6) ein Überdruckventil (52) enthält.

8. Anordnung nach einem der vorhergehenden Ansprüche, dadurch gekennzeichnet, daß sie ein Mittel (34, 35) zur Regelung des Durchsatzes des entspannten Gases enthält.

9. Anordnung nach einem der vorhergehenden Ansprüche, dadurch gekennzeichnet, daß sie einen zweiten Gasausgang (51) aufweist.

10. Anordnung nach einem der Ansprüche 6 bis 9, dadurch gekennzeichnet, daß das Manometer (9) und der Gasausgang (45) auf der gleichen Seite der Anordnung angeordnet sind.

11. Anordnung nach einem der vorhergehenden Ansprüche, dadurch gekennzeichnet, daß der Behälter eine Gasflasche (4) ist, wobei das zweite Ende (2) des dritten Blocks (1) zu seiner Montage in dem Hals (3) der Gasflasche mit einem Gewinde versehen ist.

12. Gasflasche, die mit einer Anordnung nach einem der vorhergehenden Ansprüche ausgestattet ist.

13. Gasflasche, die nach Anspruch 12 ausgestattet ist, dadurch gekennzeichnet, daß sie medizinischen Sauerstoff enthält.
